# EUROPEAN PATENT SPECIFICATION

(11) **EP 3 919 902 B1**
(45) Date of publication and mention of the grant of the patent: **08.04.2026**
(21) Application number: 20749778.5
(22) Date of filing: 27.01.2020
(51) Int. Cl.: G01N 33/2045, C23F 11/00, G01N 17/00, G01N 21/77, G01N 21/78, G01N 21/95, C23F 11/16, G01N 21/75, G01N 21/84

(54) **METHOD FOR INSPECTING REFRIGERANT PIPE AND REFRIGERANT PIPE**
VERFAHREN ZUR INSPEKTION EINES KÜHLMITTELROHRES UND KÜHLMITTELROHR
PROCÉDÉ D'INSPECTION DE TUYAU DE RÉFRIGÉRANT ET TUYAU DE RÉFRIGÉRANT

(30) Priority: 29.01.2019 JP 2019013630
(43) Date of publication of application: 08.12.2021
(73) Proprietor: DAIKIN INDUSTRIES, LTD., Osaka-Shi, Osaka 530-0001 (JP)
(72) Inventor: ARAKI, Shouhei, Osaka 530-8323 (JP); OKADA, Kunihiro, Osaka 530-8323 (JP); OHYA, Hideo, Osaka 530-8323 (JP); IMAZU, Keisuke, Osaka 530-8323 (JP); HAMA, Sayumi, Osaka 530-8323 (JP); TANAKA, Yuuji, Osaka 530-8323 (JP)
(74) Representative: Hoffmann Eitle
(86) International application number: PCT/JP2020/002815
(87) International publication number: WO 2020/158679

(56) References cited:
- WO-A1-2015/012306
- JP-A- 2001 074 198
- JP-A- 2001 074 198
- JP-A- 2003 239 085
- JP-A- 2003 239 085
- JP-A- 2009 168 692
- JP-A- H07 305 993
- JP-A- S6 240 387
- JP-U- S5 754 046
- US-A- 4 343 660
- US-A- 4 343 660
- US-A1- 2003 068 824
- ZHANG J ET AL: "Corrosion-sensing behavior of an acrylic-based coating system", CORROSION, NATIONAL ASSOCIATION OF CORROSION ENGINEERS, NACE, US, vol. 55, no. 10, 1 January 1999 (1999-01-01), pages 957 - 967, XP009089440, ISSN: 0010-9312

## Description

### Technical Field

The present disclosure relates to a method for inspecting a refrigerant pipe and a refrigerant pipe.

### Background Art

In the related art, ant-nest corrosion of refrigerant pipes and the like, which may lead to penetration through corrosion in a relatively short period of time, has been regarded as a problem.

To overcome this, for example, an inhibitor for ant-nest corrosion of a copper based material due to a lubricant attached to a pipe has been proposed, as described in JPH06-010164A.

US 4,343,660 A discloses a process of inhibiting corrosion, which comprises coating copper with a barrier corrosion inhibitor, such as a water insoluble sulfonate, for example a petroleum or similar sulfonate as illustrated by a metal petroleum sulfonate, which contains an agent capable of complexing with copper, such as an organic sulfur, nitrogen, or sulfur-nitrogen compound for example an organic triazole, thiazole or the like.

JP 2001 074198 A discloses to effectively suppress the corrosion or blackening of a copper material pipe by forming a foamed polyethylene layer on the outside surface of the copper material pipe by use of low-density polyethylene as a base resin and 4,4'-oxybis(genzenesulfonylhydrazide) as a chemical foaming agent.

US 2003/068824 A1 discloses a corrosion sensing or detecting composition and method including an aqueous gel that is adapted as a temporary coating for a surface of a material and that includes at least one composition that changes its appearance in response to corrosion occurring on the surface of the material.

### Summary of Invention

### Technical Problem

However, even if an approach is devised to inhibit ant-nest corrosion, it requires as long as several months to determine whether ant-nest corrosion occurs in an actual use environment.

The contents of the present disclosure are based on the above-described points, and an object of the present invention is to provide a method for inspecting a refrigerant pipe, the method being able to quickly determine durability, and provide a refrigerant pipe confirmed to be highly durable.

### Solution to Problem

The present invention is defined by the appended independent claims. The dependent claims describe optional features and preferred embodiments.

A method for inspecting a refrigerant pipe according to a first aspect is a method for inspecting a refrigerant pipe containing copper or a copper alloy, wherein the refrigerant pipe is inspected based on a color change of the refrigerant pipe due to exposure of the refrigerant pipe to an aqueous alkaline solution, wherein based on a color change of a refrigerant pipe having, on an outer surface thereof, an anticorrosive coating, whether there is a defect in the anticorrosive coating is inspected.

Here, the exposure of the refrigerant pipe to the aqueous alkaline solution includes not only immersion of the refrigerant pipe into the aqueous alkaline solution but also spraying of the aqueous alkaline solution onto the refrigerant pipe.

The inspection represented by the above phrase "the refrigerant pipe is inspected" is not particularly limited, and may be, for example, an inspection for evaluating refrigerant pipes with lower degrees of color change to be better and evaluating refrigerant pipes with higher degrees of color change to be worse, an inspection for ranking the quality of the refrigerant pipe, or an inspection for determining whether the refrigerant pipe is usable based on the color change of the refrigerant pipe. Alternatively, the inspection may be an inspection for evaluating refrigerant pipes with lower degrees of color change to have lower possibility of occurrence of corrosion and evaluating refrigerant pipes with higher degrees of color change to have higher possibility of occurrence of corrosion, and particularly may be an inspection for evaluating refrigerant pipes with lower degrees of color change to be less likely to undergo ant-nest corrosion and evaluating refrigerant pipes with higher degrees of color change to be more likely to undergo ant-nest corrosion. Alternatively, the inspection may be an inspection for evaluating refrigerant pipes with lower degrees of color change to take longer times until the formation of through holes and evaluating refrigerant pipes with higher degrees of color change to take shorter times until the formation of through holes.

The method for determining the color change of the refrigerant pipe is not particularly limited, and may be, for example, visual observation with naked eyes or determination of the change in optical reflectance or the change in lightness using a measuring apparatus.

According to this method for inspecting a refrigerant pipe, only by exposing a refrigerant pipe to an aqueous alkaline solution, it can be determined that the possibility of occurrence of corrosion is high when the color of the refrigerant pipe has been greatly changed, and the possibility of occurrence of corrosion is low when little or no color change has occurred. Thus, the durability of the refrigerant pipe can be quickly determined. According to this method for inspecting a refrigerant pipe, the durability of a refrigerant pipe having, on an outer surface thereof, an anticorrosive coating can be quickly determined.

A method for inspecting a refrigerant pipe according to a second aspect is the method for inspecting a refrigerant pipe according to the first aspect, wherein the aqueous alkaline solution has a pH of 9 or more and 13 or less.

According to this method for inspecting a refrigerant pipe, the durability of a refrigerant pipe can be more quickly determined.

A method for inspecting a refrigerant pipe according to a third aspect is the method for inspecting a refrigerant pipe according to the first or second aspect, wherein the aqueous alkaline solution is an aqueous solution of hydroxide of one or more metals selected from lithium, sodium, potassium, magnesium, and calcium.

A method for inspecting a refrigerant pipe according to a fourth aspect is the method for inspecting a refrigerant pipe according to any one of the first to third aspects, wherein the aqueous alkaline solution is an aqueous sodium hydroxide solution.

According to this method for inspecting a refrigerant pipe, the durability of a refrigerant pipe can be more reliably determined.

A refrigerant pipe according to a fifth aspect is a refrigerant pipe used with refrigerant flowing inside and including copper or a copper alloy, having, on an outer surface thereof, an anticorrosive coating containing at least one selected from the group consisting of (A) an organic sulfonate compound, (B) a polyhydric alcohol-organic acid ester compound, and (C) an aliphatic amine compound having 8 to 24 carbon atoms, wherein the refrigerant pipe is configured to show a color change (ΔL*) after exposure of the refrigerant pipe to an aqueous sodium hydroxide solution having a concentration of 0.2 mass% for 4 hours is 10 or less.

The color change (ΔL*) of the refrigerant pipe is preferably, but not necessarily, determined under the conditions of 25°C and 1 atm.

This refrigerant pipe has high durability because the color change (ΔL*) of the refrigerant pipe after exposure of the refrigerant pipe to an aqueous sodium hydroxide solution having a concentration of 0.2 mass% for 4 hours is 10 or less.

A refrigerant pipe according to a sixth aspect is the refrigerant pipe according to the fifth aspect having, on an outer surface thereof, an anticorrosive coating containing an organic sulfonate compound.

This refrigerant pipe has high resistance to ant-nest corrosion.

### Brief Description of Drawings

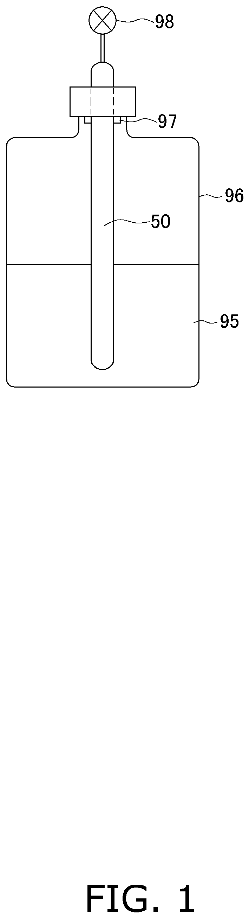

[Fig. 1] Fig. 1 illustrates how a partial immersion test is performed.

### Description of Embodiments

### (1) Method for inspecting refrigerant pipe

A refrigerant pipe to be inspected by a method for inspecting a refrigerant pipe according to this embodiment is used with refrigerant flowing inside and includes copper or a copper alloy. The refrigerant pipe may be a pipe constituting, for example, a refrigerant circuit or heat exchanger in a refrigeration apparatus such as an air conditioner.

The refrigerant pipe to be inspected preferably has, on the outer surface thereof, an anticorrosive coating. According to the method for inspecting a refrigerant pipe, in the case where an anticorrosive coating is provided on the outer surface of a refrigerant pipe, whether there is a defect in the anticorrosive coating may be inspected. Details of the anticorrosive coating will be described later.

According to the method for inspecting a refrigerant pipe, the color change of the refrigerant pipe due to exposure of the refrigerant pipe to an aqueous alkaline solution is inspected. Here, it can be determined that the higher the degree of color change of the refrigerant pipe exposed to the aqueous alkaline solution, or the higher the speed of color change, the higher the possibility of occurrence of ant-nest corrosion, and the milder the degree of color change of the refrigerant pipe exposed to the aqueous alkaline solution, or the lower the speed of color change, the lower the possibility of occurrence of ant-nest corrosion.

Here, the exposure of the refrigerant pipe to the aqueous alkaline solution includes not only immersion of the refrigerant pipe into the aqueous alkaline solution but also spraying of the aqueous alkaline solution onto the refrigerant pipe.

The method for determining the color change of the refrigerant pipe is not particularly limited, and may be, for example, visual observation with naked eyes or determination of the change in optical reflectance or the change in lightness using a measuring apparatus. More specifically, the color change of the refrigerant pipe is preferably evaluated in terms of ΔL*. Here, ΔL* is a difference in CIE lightness between two object colors according to the L*a*b* color system specified in JIS Z 8729. Specifically, ΔL* is a difference between an L* value of the refrigerant pipe before exposure to the aqueous alkaline solution and an L* value of the refrigerant pipe after exposure.

For easier determination of the possibility of occurrence of ant-nest corrosion, the aqueous alkaline solution preferably has a pH at 25°C of 9 or more and 13 or less. From the viewpoint of the acceptability in actual use of the refrigerant pipe, the pH may be 10 or more and 12 or less.

The aqueous alkaline solution is not particularly limited and may be, for example, an aqueous solution of hydroxide of one or more metals selected from lithium, sodium, potassium, magnesium, and calcium or an aqueous ammonia solution. In particular, the aqueous alkaline solution is preferably an aqueous solution of hydroxide of one or more metals selected from lithium, sodium, potassium, magnesium, and calcium, and more preferably an aqueous sodium hydroxide solution for easier determination of the possibility of occurrence of ant-nest corrosion. For example, when an aqueous sodium hydroxide solution is used as the aqueous alkaline solution, the concentration thereof may be 0.1 mass% or more and 1.0 mass% or less. To avoid excessive inspection in view of the determination of the durability of the refrigerant pipe in an actual use environment, the concentration is more preferably 0.3 mass% or less, still more preferably 0.2 mass% or less. For example, when an aqueous potassium hydroxide solution is used as the aqueous alkaline solution, the concentration thereof may be 0.1 mass% or more and 1.0 mass% or less, and is more preferably 0.3 mass% or less, still more preferably 0.2 mass% or less. For example, when an aqueous ammonia solution is used as the aqueous alkaline solution, the concentration thereof may be 0.005 mass% or more and 0.5 mass% or less, and is more preferably 0.2 mass% or less, still more preferably 0.1 mass% or less.

In the method for inspecting a refrigerant pipe, the time of exposure of the refrigerant pipe to the aqueous alkaline solution may be, for example, 0.1 hours or more and 24 hours or less, or 0.5 hours or more and 12 hours or less. For easier determination of the possibility of occurrence of ant-nest corrosion, the time of exposure is preferably 2 hours or more and 6 hours or less.

### (2) Refrigerant pipe

A refrigerant pipe according to this embodiment is used with refrigerant flowing inside and includes copper or a copper alloy. Examples of the copper or the copper alloy include pure copper, brass, and bronze. The copper alloy is preferably an alloy composed predominantly of copper. The refrigerant pipe may be a pipe constituting, for example, a refrigerant circuit or heat exchanger in a refrigeration apparatus such as an air conditioner. The refrigerant pipe preferably has, on the outer surface thereof, an anticorrosive coating.

The refrigerant pipe shows a color change (ΔL*) of 10 or less after being exposed to an aqueous sodium hydroxide solution having a concentration of 0.2 mass% for 4 hours. Here, ΔL* is a difference in CIE lightness between two object colors according to the L*a*b* color system specified in JIS Z 8729, specifically, a difference between an L* value at the outer surface of the refrigerant pipe before exposure to a 0.2 mass% aqueous sodium hydroxide solution and an L* value at the outer surface of the refrigerant pipe after exposure to the 0.2 mass% aqueous sodium hydroxide solution for 4 hours. A refrigerant pipe confirmed to have a color change (ΔL*) of 10 or less after being exposed to an aqueous sodium hydroxide solution having a concentration of 0.2 mass% for 4 hours is less likely to undergo ant-nest corrosion if used in a refrigeration apparatus such as an air conditioner. To further reduce the possibility of occurrence of ant-nest corrosion, the color change (ΔL*) of the refrigerant pipe after exposure to an aqueous sodium hydroxide solution having a concentration of 0.2 mass% for 4 hours is preferably 8 or less, more preferably 6.5 or less.

### (2-1) Anticorrosive coating

When the refrigerant pipe has, on the outer surface thereof, an anticorrosive coating, the anticorrosive coating preferably contains at least one selected from the group consisting of (A) an organic sulfonate compound, (B) a polyhydric alcohol-organic acid ester compound, and (C) an aliphatic amine compound having 8 to 24 carbon atoms. In particular, the anticorrosive coating preferably contains (A) an organic sulfonate compound because the possibility of occurrence of ant-nest corrosion can be sufficiently reduced.

### ((A) Organic sulfonate compound)

The organic sulfonate compound is preferably a synthesized sulfonate compound represented by formula (I) below and/or a synthesized sulfonate compound represented by formula (II) below. 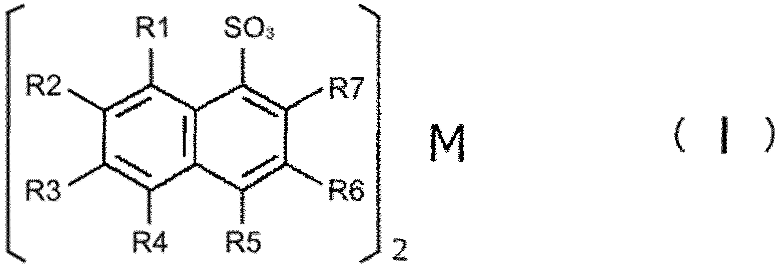 [In formula (I) above, R1 to R7 each independently represents hydrogen or an aliphatic hydrocarbon group having 4 to 12 carbon atoms (excluding the case where R1 to R7 are all hydrogen), and M represents Ca or Zn.] 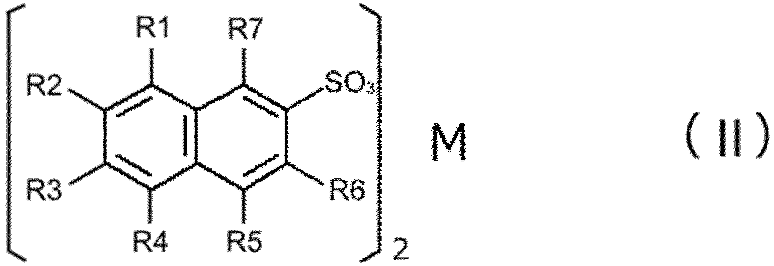 [In formula (II) above, R1 to R7 each independently represents hydrogen or an aliphatic hydrocarbon group having 4 to 12 carbon atoms (excluding the case where R1 to R7 are all hydrogen), and M represents Ca or Zn.]

In particular, calcium dinonylnaphthalene sulfonate is preferably contained as the synthesized sulfonate compound, and a rust inhibitor contained in the anticorrosive coating may composed only of calcium dinonylnaphthalene sulfonate.

The presence of the organic sulfonate compound in the anticorrosive coating on the outer surface of the refrigerant pipe can be confirmed by an analysis using a time-of-flight secondary ion mass spectrometer (TOF-SIMS).

### ((B) Polyhydric alcohol-organic acid ester compound)

The polyhydric alcohol-organic acid ester compound is preferably a glycerol fatty acid ester represented by formula (III) below.

Formula (III): R-COOCH₂-CH(OH)-CH₂OH

[In formula (III) above, R represents a linear or branched aliphatic hydrocarbon group having 11 to 29 carbon atoms.]

In particular, monoglyceryl oleate is preferably contained as the polyhydric alcohol-organic acid ester compound. The rust inhibitor contained in the anticorrosive coating may be composed only of monoglyceryl oleate or may be used in combination with a succinic anhydride derivative represented by formula (IV) below. 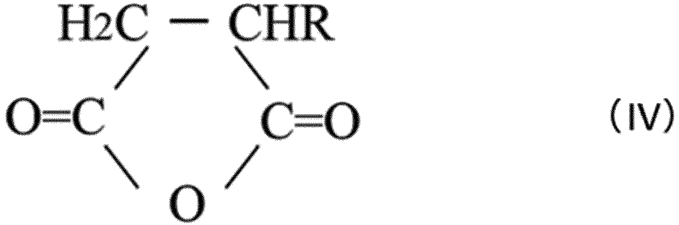 [In formula (IV) above, R represents a linear or branched aliphatic hydrocarbon group having 8 to 24 carbon atoms.]

In an analysis using a time-of-flight secondary ion mass spectrometer (TOF-SIMS), the polyhydric alcohol-organic acid ester compound present in the anticorrosive coating is detected as a corresponding organic acid. For example, in the case of monoglyceryl oleate (C₂₁H₄₀O₄), oleic acid (C₁₈H₃₃O₂⁻) is detected.

In an analysis using a time-of-flight secondary ion mass spectrometer (TOF-SIMS), the succinic anhydride derivative present in the anticorrosive coating is detected as a corresponding succinic acid derivative. For example, in the case of octadecenylsuccinic anhydride (C₂₂H₃₈O₃), octadecenylsuccinic acid (C₂₂H₃₉O₄⁻) is detected.

### ((C) Aliphatic amine compound having 8 to 24 carbon atoms)

The aliphatic amine compound having 8 to 24 carbon atoms is preferably oleylamine and may be used in combination with a succinic anhydride derivative represented by formula (IV) above.

The presence of the aliphatic amine compound having 8 to 24 carbon atoms in the anticorrosive coating on the outer surface of the refrigerant pipe can be confirmed by an analysis using a time-of-flight secondary ion mass spectrometer (TOF-SIMS).

### EXAMPLES

Examples and Comparative Examples of refrigerant pipes will be described below, but the present invention is not limited thereto.

As an aqueous alkaline solution used for inspection, an aqueous sodium hydroxide solution (pH: 12.7) having a concentration of 0.2 mass% was used in Example 1; an aqueous potassium hydroxide solution (pH: 12.6) having a concentration of 0.2 mass% was used in Example 2; and an aqueous ammonia solution (pH: 9.8) having a concentration of 0.01 mass% was used in Example 3.

As copper refrigerant pipes (phosphorous-deoxidized copper available from Kobelco & Materials Copper Tube Co., Ltd.) to be inspected, the following pipes A to J were provided.
Pipe A: Not provided with an anticorrosive coating (no coating)
Pipe B: Using a coating agent obtained by dissolving a benzotriazole compound (OA-386, trade name; available from Daiwa Fine Chemicals Co., Ltd.), a rust inhibitor, in a metalworking fluid (AF-2A, trade name; available from Idemitsu Kosan Co., Ltd.) at a concentration of 0.3 mass%, an antirust coating was formed on the outer surface of a copper refrigerant pipe.
Pipe C: Using a coating agent obtained by dissolving a benzotriazole compound (OA-386, trade name; available from Daiwa Fine Chemicals Co., Ltd.), a rust inhibitor, in a metalworking fluid (AF-2A, trade name; available from Idemitsu Kosan Co., Ltd.) at a concentration of 1.0 mass%, an antirust coating was formed on the outer surface of a copper refrigerant pipe.
Pipe D: Using a coating agent obtained by dissolving calcium dinonylnaphthalene sulfonate, a rust inhibitor, serving as (A) an organic sulfonate compound in a metalworking fluid (AF-2A, trade name; available from Idemitsu Kosan Co., Ltd.) at a concentration of 0.1 mass%, an antirust coating was formed on the outer surface of a copper refrigerant pipe.
Pipe E: Using a coating agent obtained by dissolving calcium dinonylnaphthalene sulfonate, a rust inhibitor, serving as (A) an organic sulfonate compound in a metalworking fluid (AF-2A, trade name; available from Idemitsu Kosan Co., Ltd.) at a concentration of 1.0 mass%, an antirust coating was formed on the outer surface of a copper refrigerant pipe.
Pipe F: Using a coating agent obtained by dissolving calcium dinonylnaphthalene sulfonate, a rust inhibitor, serving as (A) an organic sulfonate compound in a metalworking fluid (AF-2A, trade name; available from Idemitsu Kosan Co., Ltd.) at a concentration of 2.0 mass%, an antirust coating was formed on the outer surface of a copper refrigerant pipe.
Pipe G: Using a coating agent obtained by dissolving oleylamine, a rust inhibitor, serving as (C) an aliphatic amine compound having 8 to 24 carbon atoms in a metalworking fluid (AF-2A, trade name; available from Idemitsu Kosan Co., Ltd.) at a concentration of 1.0 mass%, an antirust coating was formed on the outer surface of a copper refrigerant pipe.
Pipe H: Using a coating agent obtained by dissolving oleylamine, a rust inhibitor, serving as (C) an aliphatic amine compound having 8 to 24 carbon atoms in a metalworking fluid (AF-2A, trade name; available from Idemitsu Kosan Co., Ltd.) at a concentration of 5.0 mass%, an antirust coating was formed on the outer surface of a copper refrigerant pipe.
Pipe I: Using a coating agent obtained by dissolving monoglyceryl oleate, a rust inhibitor, serving as (B) a polyhydric alcohol-organic acid ester compound in a metalworking fluid (AF-2A, trade name; available from Idemitsu Kosan Co., Ltd.) at a concentration of 1.0 mass%, an antirust coating was formed on the outer surface of a copper refrigerant pipe.
Pipe J: Using a coating agent obtained by dissolving monoglyceryl oleate, a rust inhibitor, serving as (B) a polyhydric alcohol-organic acid ester compound in a metalworking fluid (AF-2A, trade name; available from Idemitsu Kosan Co., Ltd.) at a concentration of 5.0 mass%, an antirust coating was formed on the outer surface of a copper refrigerant pipe.

For each of the pipes B to J, application was performed by immersion in the coating agent for 10 seconds, and after the application, drying was performed at 60°C for 5 minutes.

Here, each of the pipes A to J was tested by being immersed in the aqueous alkaline solutions of Examples 1 to 3 in an environment at 25°C for 4 hours. The L* values before immersion and after 4 hour immersion were each measured, and the difference therebetween, ΔL*, was determined. As an apparatus for measuring the L* values, ZE6000 (Nippon Denshoku Industries Co., Ltd.) was used, and the measurement was performed under the measurement conditions of a reflectivity measurement system of Φ6 and a light source of C/2.

For each of the pipes A, B, E, G, H, I, and J, a test for determining the degree of occurrence of corrosion upon exposure to an environment illustrated in Fig. 1 was performed. As illustrated in Fig. 1, each of the sample pipes A, B, E, G, H, I, and J (closed at both its ends and filled with pressurized air) was placed in a cylindrical 500 ml resin bottle 96 having an open top end, and the top end of the resin bottle 96 was hermetically sealed with a silicone cap. To prevent corrosion inside the bottle, the top end of each of the pipes A, B, E, G, H, I, and J was hermetically sealed with a hot-melt resin 97. In the hermetically sealed space (inside the resin bottle 96 and outside each of the pipes A, B, E, G, H, I, and J), 300 ml of an aqueous formic acid solution 95 having a concentration of 1000 ppm to cause ant-nest corrosion was placed. Under the above conditions, to determine the timing at which a through hole was formed in each of the pipes A, B, E, G, H, I, and J in an environment at 25°C (the timing at which a decrease in pressure was observed), the internal pressure of each of the pipes A, B, E, G, H, I, and J filled with pressurized air was observed using a pressure gauge 98.

The results of ΔL* and penetration time in the above test are shown in Table 1 and Table 2. Blanks in Table 1 mean that the test was not performed.

**[Table 1]**

| | | Pipe A | Pipe B | Pipe C | Pipe D | Pipe E | Pipe F |
|---|---|---|---|---|---|---|---|
| Example 1 | ΔL^{*} after 4 hours in 0.2 mass% aqueous sodium hydroxide solution | -33.1 | -13.5 | -19.4 | -20.7 | -5.4 | -5.8 |
| Example 2 | ΔL^{*} after 4 hours in 0.2 mass% aqueous potassium hydroxide solution | -10.5 | -9.7 | | | | -4.6 |
| Example 3 | ΔL^{*} after 4 hours in 0.01 mass% aqueous ammonia solution | -20.9 | -14.7 | | | | -6.5 |
| Time taken for penetration due to aqueous formic acid solution at 1000 ppm | | 86 | 84 | 120 | 89 | 824 | 827 |

**[Table 2]**

| | | Pipe G | Pipe H | Pipe I | Pipe J |
|---|---|---|---|---|---|
| Example 1 | ΔL^{*} after 4 hours in 0.2 mass% aqueous sodium hydroxide solution | -20.7 | -14.2 | -23.3 | -2.2 |
| Example 2 | ΔL^{*} after 4 hours in 0.2 mass% aqueous potassium hydroxide solution | | | | |
| Example 3 | ΔL^{*} after 4 hours in 0.01 mass% aqueous ammonia solution | | | | |
| Time taken for penetration due to aqueous formic acid solution at 1000 ppm | | 78 | 162 | 134 | 585 |

In Example 1 above, an inspection involving exposure to the aqueous sodium hydroxide solution having a concentration of 0.2 mass% for 4 hours was performed to show that the L* values of the pipes A, B, C, D, G, H, and I were greatly decreased, and the decreases in the L* values of the pipes E, F, and J were small. These tendencies were consistent with the tendency of actual occurrence of ant-nest corrosion during use as a refrigerant pipe (the tendency of penetration time determined using formic acid).

In Example 2, an inspection involving exposure to the aqueous potassium hydroxide solution having a concentration of 0.2 mass% for 4 hours was performed to show that the L* values of the pipes A and B were greatly decreased, and the decrease in the L* value of the pipe F was small. These tendencies were also consistent with the tendency of actual occurrence of ant-nest corrosion during use as a refrigerant pipe (the tendency of penetration time determined using formic acid).

In Example 3, an inspection involving exposure to the aqueous ammonia solution having a concentration of 0.01 mass% for 4 hours was performed to show that the L* values of the pipes A and B were greatly decreased, and the decrease in the L* value of the pipe F was small. These tendencies were also consistent with the tendency of actual occurrence of ant-nest corrosion during use as a refrigerant pipe (the tendency of penetration time determined using formic acid).

The above results show that the possibility of occurrence of ant-nest corrosion of a refrigerant pipe can be determined by an inspection using an aqueous alkaline solution. It was shown that the possibility of occurrence of ant-nest corrosion can be quickly determined when an aqueous sodium hydroxide solution among aqueous alkaline solutions is used.

## Claims

1. A method for inspecting a refrigerant pipe containing copper or a copper alloy,
wherein the refrigerant pipe is inspected based on a color change of the refrigerant pipe due to exposure of the refrigerant pipe to an aqueous alkaline solution,
wherein the refrigerant pipe has, on an outer surface thereof, an anticorrosive coating, and
whether there is a defect in the anticorrosive coating is inspected based on a color change of the refrigerant pipe.

2. The method for inspecting a refrigerant pipe according to Claim 1,
wherein the aqueous alkaline solution has a pH of 9 or more and 13 or less.

3. The method for inspecting a refrigerant pipe according to Claim 1 or 2,
wherein the aqueous alkaline solution is an aqueous solution of hydroxide of one or more metals selected from lithium, sodium, potassium, magnesium, and calcium.

4. The method for inspecting a refrigerant pipe according to any one of Claims 1 to 3,
wherein the aqueous alkaline solution is an aqueous sodium hydroxide solution.

5. A refrigerant pipe used with refrigerant flowing inside and containing copper or a copper alloy, having, on an outer surface thereof, an anticorrosive coating containing at least one selected from the group consisting of (A) an organic sulfonate compound, (B) a polyhydric alcohol-organic acid ester compound, and (C) an aliphatic amine compound having 8 to 24 carbon atoms,
wherein the refrigerant pipe is configured to show a color change (ΔL*) after exposure of the refrigerant pipe to an aqueous sodium hydroxide solution having a concentration of 0.2 mass% for 4 hours is 10 or less.

6. The refrigerant pipe according to Claim 5,
having, on an outer surface thereof, an anticorrosive coating containing an organic sulfonate compound.

## Patentansprüche

1. Verfahren zur Inspektion eines Kühlmittelrohres, das Kupfer oder eine Kupferlegierung enthält,
wobei das Kühlmittelrohr, basierend auf einer Farbänderung des Kühlmittelrohres aufgrund des Aussetzens des Kühlmittelrohres gegenüber einer wässrigen alkalischen Lösung, inspiziert wird,
wobei das Kühlmittelrohr auf einer Außenoberfläche davon eine Korrosionsschutzbeschichtung aufweist, und
ob ein Defekt in der Korrosionsschutzbeschichtung vorliegt, wird, basierend auf einer Farbänderung des Kühlmittelrohres, inspiziert.

2. Verfahren zum Inspizieren eines Kühlmittelrohres nach Anspruch 1,
wobei die wässrige alkalische Lösung einen pH-Wert von 9 oder mehr und 13 oder weniger aufweist.

3. Verfahren zum Inspizieren eines Kühlmittelrohres nach Anspruch 1 oder 2,
wobei die wässrige alkalische Lösung eine wässrige Lösung von Hydroxid eines oder mehrerer Metalle ist, ausgewählt aus Lithium, Natrium, Kalium, Magnesium und Calcium.

4. Verfahren zum Inspizieren eines Kühlmittelrohres nach einem der Ansprüche 1 bis 3,
wobei die wässrige alkalische Lösung eine wässrige Natriumhydroxidlösung ist.

5. Kühlmittelrohr, das verwendet wird, wobei darin Kältemittel strömt, und das Kupfer oder eine Kupferlegierung enthält, aufweisend, auf einer Außenoberfläche davon, eine Korrosionsschutzbeschichtung, die mindestens eines enthält, ausgewählt aus der Gruppe, bestehend aus (A) einer organischen Sulfonatverbindung, (B) einer Esterverbindung aus mehrwertigem Alkohol und organischer Säure, und (C) einer aliphatischen Aminverbindung mit 8 bis 24 Kohlenstoffatomen,
wobei das Kühlmittelrohr ausgebildet ist, eine Farbänderung (ΔL*) nach dem Aussetzen des Kühlmittelrohres für 4 Stunden gegenüber einer wässrigen Natriumhydroxidlösung mit einer Konzentration von 0,2 Masse-% zu zeigen, die 10 oder weniger ist.

6. Kühlmittelrohr nach Anspruch 5,
aufweisend, auf einer Außenoberfläche davon, eine Korrosionsschutzbeschichtung, die eine organische Sulfonatverbindung enthält.

## Revendications

1. Procédé d'inspection d'un tuyau de réfrigérant contenant du cuivre ou un alliage de cuivre,
dans lequel le tuyau de réfrigérant est inspecté sur la base d'un changement de couleur du tuyau de réfrigérant dû à l'exposition du tuyau de réfrigérant à une solution aqueuse alcaline,
dans lequel le tuyau de réfrigérant présente, sur une surface externe de celui-ci, un revêtement anticorrosion et
le fait de savoir s'il existe un défaut dans le revêtement anticorrosion est inspecté sur la base d'un changement de couleur du tuyau de réfrigérant.

2. Procédé d'inspection d'un tuyau de réfrigérant selon la revendication 1,
dans lequel la solution aqueuse alcaline présente un pH de 9 ou plus et 13 ou moins.

3. Procédé d'inspection d'un tuyau de réfrigérant selon la revendication 1 ou 2,
dans lequel la solution aqueuse alcaline est une solution aqueuse d'hydroxyde d'un ou plusieurs métaux sélectionnés parmi le lithium, le sodium, le potassium, le magnésium et le calcium.

4. Procédé d'inspection d'un tuyau de réfrigérant selon l'une quelconque des revendications 1 à 3,
dans lequel la solution aqueuse alcaline est une solution aqueuse d'hydroxyde de sodium.

5. Tuyau de réfrigérant utilisé avec du réfrigérant s'écoulant à l'intérieur et contenant du cuivre ou un alliage de cuivre, présentant, sur une surface externe de celui-ci, un revêtement anticorrosion contenant au moins un composé sélectionné dans le groupe consistant en (A) un composé sulfonate organique, (B) un composé ester d'alcool polyhydrique et d'acide organique, et (C) un composé d'amine aliphatique présentant 8 à 24 atomes de carbone,
dans lequel le tuyau de réfrigérant est configuré pour présenter un changement de couleur (ΔL*) qui, après exposition du tuyau de réfrigérant pendant 4 heures à une solution aqueuse d'hydroxyde de sodium présentant une concentration de 0,2 % en masse, est de 10 ou moins.

6. Tuyau de réfrigérant selon la revendication 5
présentant, sur une surface externe de celui-ci, un revêtement anticorrosion contenant un composé sulfonate organique.
